# EUROPEAN PATENT SPECIFICATION

(11) **EP 3 239 935 B1**
(45) Date of publication and mention of the grant of the patent: **21.04.2021**
(21) Application number: 17168307.1
(22) Date of filing: 26.04.2017
(51) Int. Cl.: G07C 5/08, G06F 21/30, G07C 5/00, H04L 9/08, H04L 9/32, H04L 29/06, H04W 12/00

(54) **PIN/PUC CODE MANAGEMENT IN VEHICLE UNITS**
PIN/PUC-CODEVERWALTUNG IN FAHRZEUGEINHEITEN
GESTION DE CODE PIN/PUC DANS DES UNITÉS DE VÉHICULES

(30) Priority: 29.04.2016 SE 1650574
(43) Date of publication of application: 01.11.2017
(73) Proprietor: Stoneridge Electronics AB, 169 73 Solna (SE)
(72) Inventor: EKSTRÖM, Peter, 127 61 Skärholmen (SE)
(74) Representative: Bergenstråhle Group AB

(56) References cited:
- EP-A1- 2 211 499
- US-A1- 2008 244 735
- US-A1- 2015 188 891
- US-A1- 2015 221 150
- US-B1- 6 490 687
- European Commission: "Appendix 13 -ITS Interface", , 28 January 2016 (2016-01-28), XP055407405, Retrieved from the Internet: URL:http://ec.europa.eu/transparency/regco mitology/index.cfm?do=Search.getPDF&ds_id= 41982&version=4&AttLang=en&db_number=16&do cType=DRAFT_MEASURE [retrieved on 2017-09-18] & European Commission: "Appendix 13 -ITS Interface", , 28 January 2016 (2016-01-28), XP055407394, Retrieved from the Internet: URL:http://ec.europa.eu/transparency/regco mitology/index.cfm?do=search.documentdetai l&Dos_ID=12275&DS_ID=41982&Version=4 [retrieved on 2017-09-18]

## Description

### Technical field

The present invention relates generally to arrangements for handling PIN/PUC codes in Vehicle Units.

### Background art

Today, transportation by vehicle requires measurement of parameters and information relating to the driver activities. This is not exclusively done to satisfy regulations regarding road transportation, but also for fleet management to measure and increase performance and efficiency, as well as for the purpose of electronic road tolling, monitoring vehicle or engine performance parameters, monitoring data relevant for special transports e.g. dangerous goods, livestock or refrigerated food etc. Therefore, most vehicles, such as lorry trucks, carry a Vehicle Unit (VU) to measure, store and possible also report the collected data. In this document, the term "Vehicle Unit" shall mean a digital unit capable of gathering information relating to the vehicle. Examples of such information may be a geographical location, driving hours, distance travelled, start time, finish time, rest time, driver name, starting location and finishing location, exhaust measurements, fuel consumption, temperature data from vehicle or cargo sensors, opening and closing of cargo doors or operation of other vehicle systems, e.g. cranes and lifts etc. One example of a VU is a digital tachograph, capable of recording and digitally compiling and storing the vehicle data.

The VU is normally located in the cabin of the vehicle, where the VU is arranged in the instrument board, so that the vehicle operator may operate the VU in adjacency to start or stop of a journey. In order to calculate and estimate the speed and the travel distance, or other parameters for instance as listed above, of the vehicle, the VU is in connectivity to one or more sensors, where the sensors are capable of measuring for instance the motion of the wheels or other parameters.

The VU may be used by law enforcement to check whether or not the driver complies with the driving regulations. Hence, the VU is normally heavily regulated and must be certified to high standards regarding functionality, safety and security. It is therefore complicated to make changes and to add new functions. An extensive certification procedure can considerably contribute to a long time to market for changes and new functions. Although a hardware and software integrated data off-load function is desirable, such solution may not be economically feasible due to the above mentioned regulation and certification restrictions.

According to the prior art solutions, the data stored within the VU is offloaded to an external device by connecting a cable to a connection port. The term "offloading data" shall be understood to be the function when the VU transfers the stored vehicle data to an external device.

The connection port is normally arranged, covered by an access panel, in a front end of the VU. When offloading the vehicle data, then the access panel is normally temporary removed to expose the connection port. Once the offloading operation is completed, the cable, connecting the external device to the connection port, is removed and the access panel replaced. This solution may be sub-optimal if a continuous data feed between the VU and the external device is desired. The physical arrangement exposes the VU of increased risk of damage due to physical breakage as the driver is moving around in the cabin of the vehicle. Moreover, the access panel needs to be removed during the data offloading procedure and thereafter restored in place.

EP 2 610 816 discloses a Vehicle Unit with an integrated antenna arranged to wirelessly send signals to and receive signals from an external device, e.g. using Bluetooth©. However, it is desirable that data from the Vehicle Unit is not transmitted freely and unprotected to any external device.

According to European Commission: "Appendix 13 - ITS Interface", the design and procedures for implementing an interface with Intelligent Transport Systems (ITS) are specified to regulate how data recorded in a vehicular tachograph is transferred to external devices. The appendix specifies that data exchange shall be performed via a Bluetooth© interface for short range (up to 10 metres) wireless communication. For security reason, the VU shall enforce a personal identification number (PIN) code authorisation system separated from the Bluetooth© pairing. Each VU shall be able to generate a PIN code for authentication purposes composed of at least 4 digits. Every time an external device pairs with the VU, it must provide the correct PIN code before receiving any data.

In case the incorrect PIN code is repeatedly provided, the VU shall block the external device from communication with the VU. For handling such situations, the VU shall be associated with an 8-digit personal unblocking code (PUC). In order to unblock a pairing with a blocked external device, the correct PUC must be provided.

US 2015/0221150 discloses a system including a processor configured to receive a vehicle-access-PIN generation request from a vehicle computing system (VCS). The processor is also configured to generate the vehicle-access-PIN. The processor is additionally configured to associate a vehicle with the vehicle-access-PIN. Further, the processor is configured to return the vehicle-access-PIN to the requesting VCS. Also, the processor is configured to receive a validation request, including a validation-PIN, from a non-vehicle computing system (NVCS). In addition, the processor is configured to validate the validation-PIN by comparison with stored vehicle-access-PINs to find a match and provide access credentials, for a vehicle associated with a stored vehicle-access-PIN that matches the validation-PIN, to the NVCS.

US 2008/0244735 discloses a method for identifying and performing a vehicle operator computer login to a vehicle computer provided in a vehicle. A device is arranged to request and receive vehicle operator data stored on a data carrier provided for a tachograph comprising a reader for reading the data carrier. The device controls communication of vehicle operator related data to the vehicle computer, wherein the device is arranged to initiate a vehicle operator login procedure of the vehicle computer, in dependence on the data carrier inserted in the tachograph. The method and device solve the problem of providing identification and login of an operator of a vehicle to the vehicle computer in a simplified and secure way.

However, handling of PIN and PUC codes may put an inordinate burden on manufacturers of VUs who, unlike communication service providers sharing the same challenges with users who misplace, forget and/or enter incorrect PIN codes, generally do not provide or want to provide comprehensive customer support service for this purpose.

Hence, there is a need to develop a solution for handling PIN codes which reduces or eliminates the burden on VU manufacturers to provide support services whilst at the same time fulfils the requirements for PIN code authorisation set out in Appendix 13 - ITS Interface.

### Summary of invention

An object of the present invention is to provide a secure and simple solution for handling PIN codes which reduces or eliminates the burden on VU manufacturers to provide support services whilst at the same time fulfils the requirements for PIN code authorisation set out in Appendix 13 - ITS Interface.

This object is achieved by a Vehicle Unit according to a first aspect of the present invention, wherein the vehicle unit comprises a display and a port adapted to receive a user data device, wherein a PIN code is associated with the Vehicle Unit, the Vehicle Unit being arranged to communicate wirelessly with an external device to transfer data recorded by the Vehicle Unit to the external device upon provision of the PIN code by the external device, wherein the Vehicle Unit is arranged to display the PIN code when an authorised user data device is inserted into the port and authenticated by the Vehicle Unit. By requiring that an authorised user data device is inserted and authorised before displaying the PIN, the vehicle unit of the invention provides a secure solution for retrieving lost or forgotten PIN codes which may be carried out by the (authorised) user without requiring further assistance from the manufacturer of the Vehicle Unit.

In a preferred embodiment, the Vehicle Unit is arranged to allow a user to change the PIN code when an authorised user data device is inserted into the port and authenticated by the Vehicle Unit upon entry of the PIN code currently associated with the Vehicle Unit. The possibility of changing the PIN code gives the user more flexibility and also ensures that unauthorised users cannot get access to the Vehicle Unit in case the PIN code is misplaced or inadvertently disclosed to others.

In an alternative embodiment, the authorised user data device is a company card or workshop card. Company or workshop cards are specially authorised cards giving access to Vehicle Units in the whole fleet of a specific company or served by a specific workshop. Such cards are only accessible to authorised people associated with the specific company or workshop and therefore seen as providing a sufficient level of security.

In a preferred embodiment, a PUC code is associated with the Vehicle Unit and the Vehicle Unit is arranged to display the PUC code when an authorised user data device is inserted into the port and authenticated by the Vehicle Unit. The PUC code allows for unblocking of blocked external devices after a number of consecutive unsuccessful attempts to provide the correct PIN code, as explained below.

In an advantageous embodiment, the Vehicle Unit is arranged to block an external device from wireless communication with the Vehicle Unit in response to consecutive unsuccessful attempts to provide the PIN code. The blocking of external devices provides an additional layer of security to avoid unauthorised users gaining access to the Vehicle Unit by guessing and providing the PIN code by repeated trial and error.

In a further preferred embodiment, wherein the Vehicle Unit is arranged to block the external device during a predetermined period of time which is dependent on the number of consecutive unsuccessful attempts to provide the PIN code. By correlating the blocking duration with the number of consecutive unsuccessful attempts, the security level can be adjusted to a desired level.

In an advantageous embodiment, the Vehicle Unit is arranged to indefinitely block an external device from wireless communication with the Vehicle Unit when the number of consecutive unsuccessful attempts to provide the PIN code exceeds a threshold value. Preferably, the Vehicle Unit is arranged to unblock the external device upon provision of a PUC code associated with the Vehicle Unit. In case of a high number of consecutive unsuccessful attempts to provide the correct PIN code, the Vehicle Unit will blacklist the external device which then no longer is able to be paired with the Vehicle Unit by means of the PIN code. Instead, the external device needs to be unblocked by providing the PUC code, which adds an additional level of security.

In an alternative embodiment, wherein an initial PIN code is associated with the Vehicle Unit, wherein the initial PIN code is of a generic, easily memorised nature. Preferably, the Vehicle Unit is arranged to prompt a user to change the initial PIN code when a user data device is inserted into the port. The initial PIN code is easy to remember and therefore facilitates handling and installation for the manufacturer and the user. By prompting the user to change the initial PIN code, the security level is assured.

In a second aspect of the present invention, there is provided a corresponding method for handling PIN codes in a Vehicle Unit comprising a display and a port adapted to receive a user data device, wherein a PIN code is associated with the Vehicle Unit, the Vehicle Unit being arranged to communicate wirelessly with an external device to transfer data recorded by the Vehicle Unit to the external device upon provision of the PIN code by the external device, the method comprising the steps of:
- detecting if an authorised user data device is inserted into the port;
- authenticating the authorised user data device; and
- displaying the PIN code on the display.

Further embodiments are provided in the dependent claims appended hereto.

### Brief description of drawings

The invention is now described, by way of example, with reference to the accompanying drawings, in which:
Fig. 1 shows a perspective view of a Vehicle Unit (VU) with a closed access panel;
Fig. 2 shows a perspective view of a Vehicle Unit (VU) with an open access panel;
Fig. 3 shows a front view of the Vehicle Unit (VU); and
Fig. 4 illustrates a block chart of a signaling scenario involving a Vehicle Unit (VU) and a User Equipment.

### Description of embodiments

In the following, a detailed description of an arrangement for handling PIN/PUC codes in Vehicle Units is provided.it should be understood that the arrangement is usually comprised in the Vehicle Unit, which is why the terms 'arrangement' and 'Vehicle Unit' are used interchangeably when discussing the features of the present invention. This should in no way be interpreted as limiting the scope of protection or how the features may combined with each other.

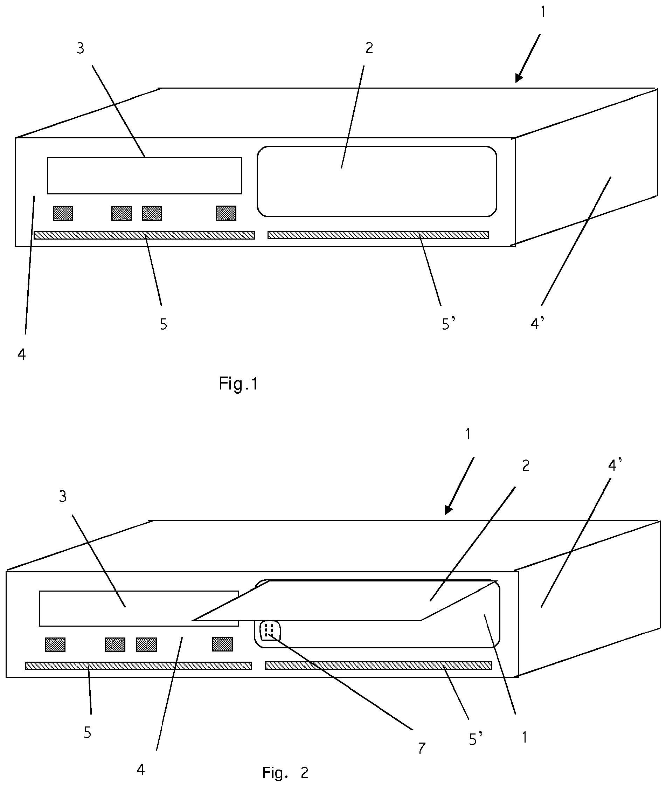

Fig. 1 illustrates a perspective view of a Vehicle Unit (VU) 1, such as a tachograph 1, for measuring, processing, storing or reporting collected vehicle data. The outer design and form factor of the VU 1 complies with standards in the field of tachographs such as e.g. ISO 7736. The front end 4 of the VU1 comprises an access panel 2 being in a closed position, i.e. wherein the access panel is closed, thereby covering a space 6 for housing a printer, preferably a removable printer module 8. The VU 1 further comprises a display 3, at least one port adapted to receive a user data device in the form of a first card tray 5 and a second card tray 5', and a first side end 4' to disclose the depth of the VU 1 in a direction perpendicular to the front side 4. Examples of user data devices to be inserted into the card trays 5, 5' include company cards, workshop cards or driver cards. The user data devices may have different levels of authorisation in order to provide access to the different functions of the VU 1 as will be explained further below.

Fig. 2 discloses the VU 1 of Fig. 1 wherein the access panel 2 has been brought to an open position, i.e. wherein the access panel 2 is open. Behind the access panel 2, the space 6 adapted to house the removable printer module 8 is disclosed. Preferably, the access panel 2 is pivotally arranged on the removable printer module 8 on the back side 2' of the access panel 2. On one side of the space 6 a connection port 7 has been arranged, wherein the connection port is accessible from the front side of the VU 1 and the ports connection pins extend in a direction normal to the plane of the front side. The connection port 7 is covered by the access panel 2 when the access panel 2 is in a closed position. The connection port 7 is adapted for off-loading data stored in the VU 1 to an external device by connecting a cable between the connection port 7 and an external device. The connection port may be a serial connection port. During offloading of data using a cable connection between the connection port and an external device, the access panel 2 including the removable printer module 8 is removed entirely from the front end 4 of the VU 1 in order to expose the connection port 7. This may be done by a manual operation performed by for instance the driver of the vehicle, in a sequence of steps including first bringing the access panel 2 into an open position and thereafter pulling the access panel 2 in a direction normal to a plane of the access panel 2 and towards the driver.

According to one possible embodiment, the connection port 7 may be a serial data interface, i.e. a serial port. The connection port 7 may typically be arranged such that information stored or processed within the VU 1, can be off-loaded to an external device. The usage and operation of serial ports exists in profusion in the prior art.

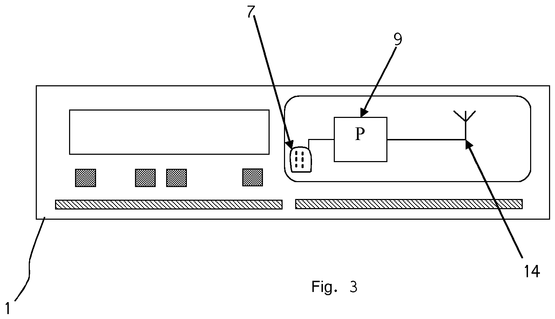

Fig. 3 shows a front view of the VU 1, illustrating a block chart of the components of the access panel 2 as well as the area covered by the access panel 2 when the access panel is in a closed position. For the purpose of transmitting vehicle data from the VU 1 and communicating to external devices without connecting a cable there between, the access panel 2 has been equipped with an integrated antenna 14. Integration of the integrated antenna 14 into the access panel 2 may be achieved by moulding the antenna into the material of the access panel 2, such as plastic, in a way that no portion of the antenna extends beyond the surface of the access panel 2, i.e. wherein the integrated antenna is arranged within the external surface of the access panel 2. The external surface of the access panel 2 means the outermost boundary of the access panel 2. Integration of the integrated antenna 14 into the material such as plastic may also comprise moulding the antenna 14 into the material such that a portion of the antenna 14 is arranged inside the external surface of the access panel 2 and a portion of the antenna 14 is arranged to protrude from the external surface of the access panel 2. Integration of the integrated antenna 14 into the material such as plastic of the access panel 2 may also comprise attaching an antenna onto and adjacent the surface of the access panel, preferably on a back side 2' of the access panel 2. The integrated antenna is preferably a short range antenna such as a Bluetooth antenna adapted to wirelessly send signals to, and receive signals from external devices located within or in close proximity of the vehicle. The integrated antenna 14 is further connected to a processing unit 9 for protocol processing or conversion wherein protocol processing or conversion comprises for instance protocol translation, tunnelling, encapsulation, which will be described in further detail below in this description. The processing unit 9 and the integrated antenna 14 are further connectable to the connection port 7 via contact device 15. The processing unit 9 is connected in series between the integrated antenna 14 and the connection port 7. Preferably, the processing unit 9 is integrated into the material of the access panel 2 together with the integrated antenna 14 during the moulding process of the access panel 2. However, in a manner similar to that of the integrated antenna 14, the integration of the processing unit 9 may also mean that the processing unit 9 is attached onto and adjacent the surface of the access panel 2.

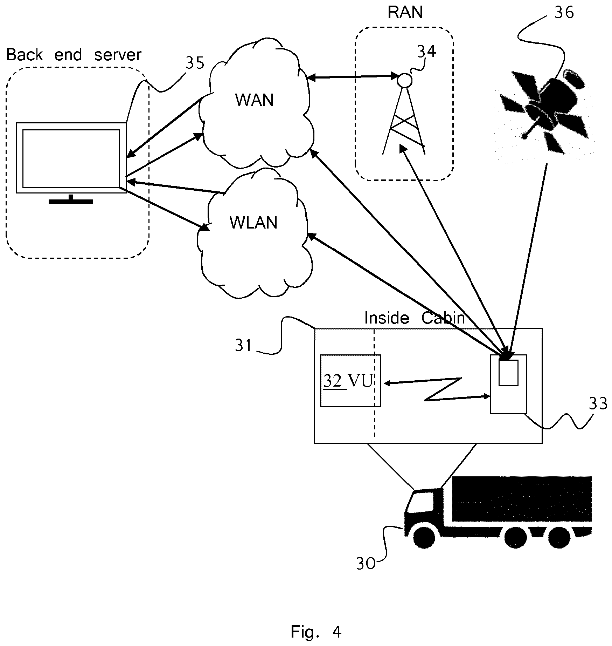

With reference to Fig. 4, a block chart illustrating a signalling scenario involving a VU 1, 32 and an external device, such as a User Equipment, UE, 33 is described. Fig. 4 shows a vehicle 30 having a VU 1, 32 arranged in the operating cabin of the vehicle 30. The VU 32 is in wireless communication connectivity with a UE 33.

According to one possible example, the VU 1, 32 can transmit data using high frequency radio communication. Although the distance of such radio communication is limited, 5 meters of signal reach will normally suffice to connect the VU 1, 32 and the UE 33. According to one possible example, the VU 1, 32 comprises a Bluetooth antenna and processor, enabling a Personal Area Network, PAN, comprising the VU 1, 32 and one or more UEs 33. However, also other wireless technologies, such as Ultra-Wide Band (UWB) or Wireless Local Area Network LAN, Institute of Electrical and Electronics Engineers, IEEE, 802.11, are also possible for enabling a wireless communication between the VU 1, 32 and the UE 33.

The communication using wireless interface formed between the UE 33 and the integrated antenna of the VU 1, 32 is of a first communication protocol. The first communication protocol is defined in the prior art for WLAN, Bluetooth or any of the UWB implementations. However, the connection port may be of another interface type which requires protocol processing or conversion such as translation, tunnelling or encapsulation from the first communication protocol into a second communication protocol, or vice versa, to enable the wireless communication. According to one possible embodiment, the communication port of the VU1, 32, as shown in Figs 2-4d, is a serial port having a serial communication physical interface which may require the processing unit, being connected to the integrated antenna, to process or convert, data to be sent, or which is received, to comply with the VU 1, 32 and the UE 33.

The UE 33 may further be capable of receiving Global Positioning System (GPS) signals from one or more satellites 36. The UE 33 can thereby compile and structure information relating to the vehicle 30, provided by the VU 1, 32 using the wireless interface between the UE 33 and the VU 1, 32, based on the geographical position of the vehicle 30.

The UE 33 may be capable of communicate using a Radio Access Network, RAN, comprising a Base Station 34. The BS 34 can then communicate, using a Wide Area Network, such as Internet or a private WAN, such as a corporate network, with a back end server 35, which may comprise a fleet management system. The UE 33 may also be adapted to communicate directly with a back end server 35 using a WAN or in certain situations a Wireless Local Area Network, WLAN. The latter may be preferable in a situation wherein the vehicle and the UE 33 is located or parked close to and using the WLAN of for instance a home office, goods terminal or at a customs station. In other words, the VU 1, 32 may provide information relating to the operation of the vehicle 30 to the UE 33 using the wireless interface between the VU 1, 32 and the UE 33. Then, the UE 33 may provide parts, or all, of the information relating to the operation of the vehicle to a back end server 35. The back end server 35, according to one embodiment comprising a fleet management system may then, based on the provided information, help the vehicle operator to make decisions for a more efficient transportation.

In order to wirelessly connect the UE 33 to the VU 1, 32 for transfer and uploading of vehicle data recorded by the VU 1, 32, the user is required to provide a personal identification number (PIN code) associated with the VU 1, 32, e.g. directly into the VU 1, 32 through a suitable interface (numeric keypad, touchscreen display or similar) or via the UE 33 to be connected.

Normally, the PIN code is pre-programmed into the VU 1, 32 upon delivery from the manufacturer. The PIN code may also be provided in (paper) documentation accompanying the VU 1, 32 upon delivery. However, this documentation is not intended to be kept in the vehicle 30. The vehicle 30 may be used by many different users such as drivers, workshop mechanics, maintenance staff etc. Often, an otherwise authorised user wishing to connect a UE 33 to the VU 1, 32 may therefore not have in situ access to the PIN code associated with the VU 1, 32 in the vehicle 30. The present invention offers a simple solution to problems with handling of PIN codes in such situations, obviating the need for an especially dedicated customer service to assist authorised users not having access to the PIN code, due to misplacement or for other reasons being unable to enter the correct PIN code associated with the VU 1, 32.

According to the present invention, the VU 1, 32 is arranged to display the PIN code associated with the VU 1, 32 when an authorised user data device is inserted into one of the card trays 5, 5'. In the context of the present invention, an authorised user data device shall be understood as any user data device (e.g. card) which may be authenticated to verify a relationship between the cardholder and the registered owner of the vehicle 30. As an example, the vehicle 30 may be part of a fleet of vehicles owned and operated by e.g. a haulage or logistics company or public transit company. Then the cardholder may be a driver, a mechanic, maintenance staff etc. employed or contracted by the company to drive, service or for other reasons being allowed access to the vehicle 30 and the VU 1, 32. The user data device may then be a driver card, a workshop card or a company card. Hence, any authorised cardholder may retrieve the PIN code associated with the VU 1, 32 simply by inserting the card into the VU 1, 32.

Furthermore, the VU 1, 32 is arranged to allow authorised users to change the PIN code such that the level of security of the wireless pairing of the VU 1, 32 with a UE 33 is not compromised in case of the PIN code becoming known to non-authorised users. In order to change the PIN code, the user must insert an authorised card into the VU 1, 32, enter the current PIN code associated with the VU 1, 32 and then enter a new PIN code.

In case an incorrect PIN code is entered into the VU 1, 32, the VU 1, 32 will not give access to the UE 33 trying to connect. To avoid non-authorised users trying to gain access to the VU 1, 32 through repeated/consecutive forced attempts to enter the (incorrect) PIN code, the VU 1, 32 is arranged to block or blacklist the UE 33. In accordance with Appendix 13 - ITS Interface, the duration of blocking or blacklisting depends on the number of consecutive unsuccessful or failed attempts to enter the PIN code. If the number of consecutive unsuccessful attempts exceeds a threshold value, the blocking becomes permanent.

As with other analogous systems (e.g. SIM cards for mobile phones), there may also be provided a personal unblocking code (PUC) associated with the VU 1, 32 to be used to unblock a permanently blocked UE 33. As with the PIN code, the PUC code may not be accessible in situ. Therefore, the VU 1, 32 is arranged to display the PUC code in a similar fashion to the displaying of the PIN code, i.e. upon insertion and authentication of an authorised user data device (card) into the VU 1, 32. However, it is desirable that only company cards and workshop cards are authorised for this purpose. The number of driver cards is usually higher than the number of company cards and workshop cards and can therefore more easily be misplaced or stolen, thereby compromising the level of security.

The PIN code can be a simple, easily memorised PIN code such as '1234' or similar. As the initial PIN code may easily be guessed by non-authorised users, the VU 1, 32 is arranged to prompt a user to change the initial PIN code when an authorised user data device is inserted into the port. To this end, the user is required to enter or provide the initial PIN code before entering a new PIN code to replace the initial PIN code.

## Claims

1. A Vehicle Unit (1; 32) comprising a display (3) and a port (5, 5') adapted to receive a user data device, wherein a PIN code is associated with the Vehicle Unit (1; 32), the Vehicle Unit (1; 32) being arranged to communicate wirelessly with an external device (33) to transfer data recorded by the Vehicle Unit (1; 32) to the external device (33) upon provision of the PIN code by the external device (33), **characterised in that** the Vehicle Unit (1; 32) is arranged to display the PIN code when an authorised user data device is inserted into the port (5, 5') and authenticated by the Vehicle Unit (1; 32).

2. The Vehicle Unit (1; 32) according to claim 1, wherein the Vehicle Unit (1; 32) is arranged to allow a user to change the PIN code when an authorised user data device is inserted into the port and authenticated by the Vehicle Unit (1; 32) upon entry of the PIN code currently associated with the Vehicle Unit (1; 32).

3. The Vehicle Unit (1; 32) according to any one of the preceding claims, wherein the authorised user data device is a company card, workshop card or driver card.

4. The Vehicle Unit (1; 32) according to claim 1 or 2, wherein a PUC code is associated with the Vehicle Unit (1; 32) and the Vehicle Unit (1; 32) is arranged to display the PUC code when an authorised user data device is inserted into the port and authenticated by the Vehicle Unit (1; 32), wherein the authorised user data device is a company card or a workshop card.

5. The Vehicle Unit (1; 32) according to any one of the preceding claims, wherein the Vehicle Unit (1; 32) is arranged to block the external device (33) from wireless communication with the Vehicle Unit (1; 32) in response to consecutive unsuccessful attempts to provide the PIN code.

6. The Vehicle Unit (1; 32) according to claim 5, wherein the Vehicle Unit (1; 32) is arranged to block the external device (33) during a predetermined period of time which is dependent on the number of consecutive unsuccessful attempts to provide the PIN code.

7. The Vehicle Unit (1; 32) according to claim 5 or 6, wherein the Vehicle Unit (1; 32) is arranged to indefinitely block the external device (33) from wireless communication with the Vehicle Unit (1; 32) when the number of consecutive unsuccessful attempts to provide the PIN code exceeds a predetermined threshold value.

8. The Vehicle Unit (1; 32) according to claim 7, wherein the Vehicle Unit (1; 32) is arranged to unblock the external device (33) upon provision of a PUC code associated with the Vehicle Unit (1; 32).

9. The Vehicle Unit (1; 32) according to any one of the preceding claims, wherein an initial PIN code is associated with the Vehicle Unit (1; 32).

10. The Vehicle Unit (1; 32) according to claim 9, wherein the Vehicle Unit (1; 32) is arranged to prompt a user to change the initial PIN code when an authorised user data device is inserted into the port.

11. A method for managing PIN codes in a Vehicle Unit (1; 32) comprising a display (3) and a port (5, 5') adapted to receive a user data device, wherein a PIN code is associated with the Vehicle Unit (1; 32), the Vehicle Unit (1; 32) being arranged to communicate wirelessly with an external device (33) to transfer data recorded by the Vehicle Unit (1; 32) to the external device (33) upon provision of the PIN code by the external device (33), the method comprising the steps of:
- detecting if an authorised user data device is inserted into the port;
- authenticating the authorised user data device; and
- displaying the PIN code on the display.

12. The method according to claim 11, wherein the Vehicle Unit (1; 32) is arranged to allow a user to change the PIN code, the method further comprising the steps of:
- prompting a user to enter the PIN code currently associated with the Vehicle Unit (1; 32);
- verifying if the entered PIN code is correct; and
- prompting the user to enter a new PIN code.

13. The method according to claim 11 or 12, wherein a PUC code is associated with the Vehicle Unit (1; 32), the method further comprising the step of:
- displaying the PUC code on the display.

14. The method according to any one of claims 11-13, further comprising the steps of:
- verifying if a PIN code provided by the external device (33) is correct;
- if an incorrect PIN code is provided, prompting a user to provide the PIN code again; and
- blocking the external device (33) from wireless communication with the Vehicle Unit (1; 32) in response to consecutive unsuccessful attempts to provide the correct PIN code.

15. The method according to claim 14, wherein the blocking is effective during a predetermined period of time which is dependent on the number of consecutive unsuccessful attempts to provide the PIN code.

16. The method according to claim 14 or 15, further comprising the steps of:
- blocking the external device (33) indefinitely if the number of consecutive unsuccessful attempts to provide the PIN code exceeds a predetermined threshold value.

17. The method according to claim 16, further comprising the steps of:
- prompting a user to provide a PUC code associated with the Vehicle Unit (1; 32) by means of the indefinitely blocked external device (33);
- verifying if the PUC code provided by the indefinitely blocked external device (33) is correct; and
- if the provided PUC is correct, unblocking the indefinitely blocked external device (33).

18. The method according to any one of claims 11-17, wherein an initial PIN code is associated with the Vehicle Unit (1; 32), the method further comprising the steps of:
- prompting a user to change the initial PIN code.

## Patentansprüche

1. Fahrzeugeinheit (1; 32), umfassend eine Anzeige (3) und einen Port (5, 5'), die dazu angepasst ist, eine Benutzerdatenvorrichtung aufzunehmen, wobei ein PIN-Code mit der Fahrzeugeinheit (1; 32) verbunden ist, wobei die Fahrzeugeinheit (1; 32) dazu eingerichtet ist, drahtlos mit einer externen Vorrichtung (33) zu kommunizieren, um auf eine Bereitstellung des PIN-Codes durch die externe Vorrichtung (33) von der Fahrzeugeinheit (1; 32) aufgezeichnete Daten zu der externen Vorrichtung (33) zu übertragen, **dadurch gekennzeichnet, dass** die Fahrzeugeinheit (1; 32) dazu eingerichtet ist, den PIN-Code anzuzeigen, wenn eine autorisierte Benutzerdatenvorrichtung in den Port (5, 5') eingesetzt ist und durch die Fahrzeugeinheit (1; 32) authentifiziert ist.

2. Fahrzeugeinheit (1; 32) nach Anspruch 1, wobei die Fahrzeugeinheit (1; 32) dazu eingerichtet ist, es einem Benutzer auf einen Eintrag des aktuell mit der Fahrzeugeinheit (1; 32) verbundenen PIN-Codes zu ermöglichen, den PIN-Code zu ändern, wenn eine autorisierte Benutzerdatenvorrichtung in den Port eingesetzt ist und durch die Fahrzeugeinheit (1; 32) authentifiziert ist.

3. Fahrzeugeinheit (1; 32) nach einem der vorstehenden Ansprüche, wobei die autorisierte Benutzerdatenvorrichtung eine Firmenkarte, Werkstattkarte oder Fahrerkarte ist.

4. Fahrzeugeinheit (1; 32) nach Anspruch 1 oder 2, wobei ein PUK-Code mit der Fahrzeugeinheit (1; 32) verbunden ist und die Fahrzeugeinheit (1; 32) dazu eingerichtet ist, den PUK-Code anzuzeigen, wenn eine autorisierte Benutzerdatenvorrichtung in den Port eingesetzt ist und durch die Fahrzeugeinheit (1; 32) authentifiziert ist, wobei die autorisierte Benutzerdatenvorrichtung eine Firmenkarte oder eine Werkstattkarte ist.

5. Fahrzeugeinheit (1; 32) nach einem der vorstehenden Ansprüche, wobei die Fahrzeugeinheit (1; 32) dazu eingerichtet ist, die externe Vorrichtung (33) als Reaktion auf aufeinanderfolgende erfolglose Versuche, den PIN-Code bereitzustellen, von einer drahtlosen Kommunikation mit der Fahrzeugeinheit (1; 32) auszusperren.

6. Fahrzeugeinheit (1; 32) nach Anspruch 5, wobei die Fahrzeugeinheit (1; 32) dazu eingerichtet ist, die externe Vorrichtung (33) während einer vorbestimmten Zeitspanne, die von der Anzahl von aufeinanderfolgenden erfolglosen Versuchen, den PIN-Code bereitzustellen, abhängt, zu sperren.

7. Fahrzeugeinheit (1; 32) nach Anspruch 5 oder 6, wobei die Fahrzeugeinheit (1; 32) dazu eingerichtet ist, die externe Vorrichtung (33) unbefristet von einer drahtlosen Kommunikation mit der Fahrzeugeinheit (1; 32) auszusperren, wenn die Anzahl von aufeinanderfolgenden erfolglosen Versuchen, den PIN-Code bereitzustellen, einen vorbestimmten Schwellenwert überschreitet.

8. Fahrzeugeinheit (1; 32) nach Anspruch 7, wobei die Fahrzeugeinheit (1; 32) dazu eingerichtet ist, die externe Vorrichtung (33) auf eine Bereitstellung eines mit der Fahrzeugeinheit (1; 32) verbundenen PUK-Codes zu entsperren.

9. Fahrzeugeinheit (1; 32) nach einem der vorstehenden Ansprüche, wobei ein initialer PIN-Code mit der Fahrzeugeinheit (1; 32) verbunden ist.

10. Fahrzeugeinheit (1; 32) nach Anspruch 9, wobei die Fahrzeugeinheit (1; 32) dazu eingerichtet ist, einen Benutzer dazu aufzufordern, den initialen PIN-Code zu ändern, wenn eine autorisierte Benutzerdatenvorrichtung in den Port eingesetzt ist.

11. Verfahren zum Verwalten von PIN-Codes in einer Fahrzeugeinheit (1; 32), umfassend eine Anzeige (3) und einen Port (5, 5'), die dazu angepasst ist, eine Benutzerdatenvorrichtung aufzunehmen, wobei ein PIN-Code mit der Fahrzeugeinheit (1; 32) verbunden ist, wobei die Fahrzeugeinheit (1; 32) dazu eingerichtet ist, drahtlos mit einer externen Vorrichtung (33) zu kommunizieren, um auf eine Bereitstellung des PIN-Codes durch die externe Vorrichtung (33) von der Fahrzeugeinheit (1; 32) aufgezeichnete Daten zu der externen Vorrichtung (33) zu übertragen, wobei das Verfahren die folgenden Schritte umfasst:
- Erkennen, ob eine autorisierte Benutzerdatenvorrichtung in den Port eingesetzt ist;
- Authentifizieren der autorisierten Benutzerdatenvorrichtung; und
- Anzeigen des PIN-Codes auf der Anzeige.

12. Verfahren nach Anspruch 11, wobei die Fahrzeugeinheit (1; 32) dazu eingerichtet ist, es einem Benutzer zu ermöglichen, den PIN-Code zu ändern, wobei das Verfahren weiter die folgenden Schritte umfasst:
- einen Benutzer auffordern, den aktuell mit der Fahrzeugeinheit (1; 32) verbundenen PIN-Code einzugeben;
- Verifizieren, ob der eingegebene PIN-Code korrekt ist; und
- den Benutzer auffordern, einen neuen PIN-Code einzugeben.

13. Verfahren nach Anspruch 11 oder 12, wobei ein PUK-Code mit der Fahrzeugeinheit (1; 32) verbunden ist, wobei das Verfahren weiter den folgenden Schritt umfasst:
- Anzeigen des PUK-Codes auf der Anzeige.

14. Verfahren nach einem der Ansprüche 11-13, das weiter die folgenden Schritte umfasst:
- Verifizieren, ob ein durch die externe Vorrichtung (33) bereitgestellter PIN-Code korrekt ist;
- wenn ein inkorrekter PIN-Code bereitgestellt ist, einen Benutzer auffordern, den PIN-Code erneut bereitzustellen; und
- Aussperren der externen Vorrichtung (33) von einer drahtlosen Kommunikation mit der Fahrzeugeinheit (1; 32) als Reaktion auf aufeinanderfolgende erfolglose Versuche, den korrekten PIN-Code bereitzustellen.

15. Verfahren nach Anspruch 14, wobei das Sperren während einer vorbestimmten Zeitspanne effektiv ist, die von der Anzahl von aufeinanderfolgenden erfolglosen Versuchen, den PIN-Code bereitzustellen, abhängt.

16. Verfahren nach Anspruch 14 oder 15, das weiter die folgenden Schritte umfasst:
- Unbefristetes Sperren der externen Vorrichtung (33), wenn die Anzahl von aufeinanderfolgenden erfolglosen Versuchen, den PIN-Code bereitzustellen, einen vorbestimmten Schwellenwert überschreitet.

17. Verfahren nach Anspruch 16, das weiter die folgenden Schritte umfasst:
- einen Benutzer auffordern, mittels der unbefristet gesperrten externen Vorrichtung (33) einen mit der Fahrzeugeinheit (1; 32) verbundenen PUK-Code bereitzustellen;
- Verifizieren, ob der durch die unbefristet gesperrte externe Vorrichtung (33) bereitgestellte PUK-Code korrekt ist; und
- wenn der bereitgestellte PUK korrekt ist, Entsperren der unbefristet gesperrten externen Vorrichtung (33).

18. Verfahren nach einem der Ansprüche 11-17, wobei ein initialer PIN-Code mit der Fahrzeugeinheit (1; 32) verbunden ist, wobei das Verfahren weiter die folgenden Schritte umfasst:
- einen Benutzer auffordern, den initialen PIN-Code zu ändern.

## Revendications

1. Unité de véhicule (1 ; 32) comprenant un dispositif d'affichage (3) et un port (5, 5') adapté pour recevoir un dispositif de données d'utilisateur, dans lequel un code PIN est associé à l'unité de véhicule (1; 32), l'unité de véhicule (1; 32) étant agencée pour communiquer sans fil avec un dispositif externe (33) pour transférer des données enregistrées par l'unité de véhicule (1 ; 32) au dispositif externe (33) lors de la fourniture du code PIN par le dispositif externe (33), **caractérisée en ce que** l'unité de véhicule (1 ; 32) est agencée pour afficher le code PIN quand un dispositif de données d'utilisateur autorisé est inséré dans le port (5, 5') et authentifié par l'unité de véhicule (1 ; 32).

2. Unité de véhicule (1; 32) selon la revendication 1, dans laquelle l'unité de véhicule (1; 32) est agencée pour permettre à un utilisateur de changer le code PIN quand un dispositif de données d'utilisateur autorisé est inséré dans le port et authentifié par l'unité de véhicule (1; 32) lors de la saisie du code PIN actuellement associé à l'unité de véhicule (1 ; 32).

3. Unité de véhicule (1 ; 32) selon l'une quelconque des revendications précédentes, dans laquelle le dispositif de données d'utilisateur autorisé est une carte d'entreprise, une carte d'atelier ou une carte de conducteur.

4. Unité de véhicule (1 ; 32) selon la revendication 1 ou 2, dans laquelle un code PUC est associé à l'unité de véhicule (1 ; 32) et l'unité de véhicule (1 ; 32) est agencée pour afficher le code PUC quand un dispositif de données d'utilisateur autorisé est inséré dans le port et authentifié par l'unité de véhicule (1 ; 32), dans laquelle le dispositif de données d'utilisateur autorisé est une carte d'entreprise ou une carte d'atelier.

5. Unité de véhicule (1 ; 32) selon l'une quelconque des revendications précédentes, dans laquelle l'unité de véhicule (1; 32) est agencée pour bloquer le dispositif externe (33) par rapport à une communication sans fil avec l'unité de véhicule (1 ; 32) en réponse à des tentatives échouées consécutives pour fournir le code PIN.

6. Unité de véhicule (1; 32) selon la revendication 5, dans laquelle l'unité de véhicule (1 ; 32) est agencée pour bloquer le dispositif externe (33) durant une période de temps prédéterminée qui dépend du nombre de tentatives échouées consécutives pour fournir le code PIN.

7. Unité de véhicule (1; 32) selon la revendication 5 ou 6, dans laquelle l'unité de véhicule (1; 32) est agencée pour bloquer indéfiniment le dispositif externe (33) par rapport à une communication sans fil avec l'unité de véhicule (1 ; 32) quand le nombre de tentatives échouées consécutives pour fournir le code PIN dépasse une valeur de seuil prédéterminée.

8. Unité de véhicule (1; 32) selon la revendication 7, dans laquelle l'unité de véhicule (1; 32) est agencée pour débloquer le dispositif externe (33) lors de la fourniture d'un code PUC associé à l'unité de véhicule (1 ; 32).

9. Unité de véhicule (1 ; 32) selon l'une quelconque des revendications précédentes, dans laquelle un code PIN initial est associé à l'unité de véhicule (1 ; 32).

10. Unité de véhicule (1; 32) selon la revendication 9, dans laquelle l'unité de véhicule (1 ; 32) est agencée pour inviter un utilisateur à changer le code PIN initial quand un dispositif de données d'utilisateur autorisé est inséré dans le port.

11. Procédé de gestion de codes PIN dans une unité de véhicule (1 ; 32) comprenant un dispositif d'affichage (3) et un port (5, 5') adapté pour recevoir un dispositif de données d'utilisateur, dans lequel un code PIN est associé à l'unité de véhicule (1 ; 32), l'unité de véhicule (1 ; 32) étant agencée pour communiquer sans fil avec un dispositif externe (33) pour transférer des données enregistrées par l'unité de véhicule (1 ; 32) au dispositif externe (33) lors de la fourniture du code PIN par le dispositif externe (33), le procédé comprenant les étapes suivantes :
- la détection si un dispositif de données d'utilisateur autorisé est inséré dans le port;
- l'authentification du dispositif de données d'utilisateur autorisé ; et
- l'affichage du code PIN sur le dispositif d'affichage.

12. Procédé selon la revendication 11, dans lequel l'unité de véhicule (1 ; 32) est agencée pour permettre à un utilisateur de changer le code PIN, le procédé comprenant en outre les étapes suivantes :
- l'invitation d'un utilisateur à saisir le code PIN actuellement associé à l'unité de véhicule (1 ; 32) ;
- la vérification si le code PIN saisi est correct ; et
- l'invitation de l'utilisateur à saisir un nouveau code PIN.

13. Procédé selon la revendication 11 ou 12, dans lequel un code PUC est associé à l'unité de véhicule (1 ; 32), le procédé comprenant en outre l'étape suivante :
- l'affichage du code PUC sur le dispositif d'affichage.

14. Procédé selon l'une quelconque des revendications 11-13, comprenant en outre les étapes suivantes :
- la vérification si un code PIN fourni par le dispositif externe (33) est correct ;
- si un code PIN incorrect est fourni, l'invitation d'un utilisateur à fournir à nouveau le code PIN; et
- le blocage du dispositif externe (33) par rapport à une communication sans fil avec l'unité de véhicule (1 ; 32) en réponse à des tentatives échouées consécutives pour fournir le code PIN correct.

15. Procédé selon la revendication 14, dans lequel le blocage est efficace durant une période de temps prédéterminée qui dépend du nombre de tentatives échouées consécutives pour fournir le code PIN.

16. Procédé selon la revendication 14 ou 15, comprenant en outre les étapes suivantes :
- le blocage du dispositif externe (33) indéfiniment si le nombre de tentatives échouées consécutives pour fournir le code PIN dépasse une valeur de seuil prédéterminée.

17. Procédé selon la revendication 16, comprenant en outre les étapes suivantes :
- l'invitation d'un utilisateur à fournir un code PUC associé à l'unité de véhicule (1 ; 32) au moyen du dispositif externe (33) bloqué indéfiniment ;
- la vérification si le code PUC fourni par le dispositif externe (33) bloqué indéfiniment est correct ; et
- si le code PUC fourni est correct, débloquer le dispositif externe (33) bloqué indéfiniment.

18. Procédé selon l'une quelconque des revendications 11-17, dans lequel un code PIN initial est associé à l'unité de véhicule (1 ; 32), le procédé comprenant en outre les étapes suivantes :
- l'invitation d'un utilisateur à changer le code PIN initial.
